# EUROPEAN PATENT APPLICATION

(11) **EP 4 746 185 A1**
(43) Date of publication of application: **20.05.2026**
(21) Application number: 24838900.9
(22) Date of filing: 12.07.2024
(51) Int. Cl.: H01M 50/545, H01M 50/516

(54) **BATTERY, ELECTRONIC DEVICE AND POLARITY LEADING-OUT METHOD**

(30) Priority: 12.07.2023 CN 202310847718
(71) Applicant: NingDe Amperex Technology Limited, Ningde City, Fujian 352100 (CN)
(72) Inventor: CHENG, Kaifan, Ningde, Fujian 352100 (CN); ZHANG, Qingwen, Ningde, Fujian 352100 (CN); DAI, Zhifang, Ningde, Fujian 352100 (CN)
(74) Representative: Kraus & Lederer PartGmbB
(86) International application number: PCT/CN2024/105251
(87) International publication number: WO 2025/011649

(57) **Abstract**

A battery (100), an electronic device, and a polarity lead-out method are disclosed. The battery (100) includes a housing (10) and an electrode assembly (20) accommodated in the housing (10), an inner surface of the housing (10) is provided with a first welding zone (132), the first welding zone (132) is configured to be welded to the electrode assembly (20), the first welding zone (132) includes a negative ion organic peak 118, an ion count ratio of the negative ion organic peak 118 is A1%, and A1≤0.5. The housing (10) may be welded to the electrode assembly (20) through the first welding zone (132) to lead out a positive electrode or a negative electrode of the electrode assembly (20). A degree of impurities contained in the first welding zone (132) may be defined by a content of an antirust agent component. The housing (10) is cleaned to obtain the first welding zone (132). During cleaning, a main component obtained after thermal cracking of the antirust agent is triethanolamine, and a corresponding organic peak is 118. Since the ion count ratio of the negative ion organic peak 118 of the first welding zone (132) is A1%, and A1≤0.5, an impurity content thereof is significantly reduced, and during welding of the housing (10) and the electrode assembly (20), explosion point formation can be effectively reduced, thereby reducing the risk of electrolyte leakage of the battery (100) to improve the safety performance of the battery (100).

## Description

### CROSS-REFERENCE TO RELATED APPLICATIONS

This application claims priority to Chinese Patent Application No. 202310847718.3, filed with the China National Intellectual Property Administration on July 12, 2023 and entitled "BATTERY, ELECTRONIC DEVICE, AND POLARITY LEAD-OUT METHOD", which is incorporated herein by reference in its entirety.

### TECHNICAL FIELD

Embodiments of this application relate to the field of electrochemical technology, in particular to a battery, an electronic device, and a polarity lead-out method.

### BACKGROUND

In a traditional battery, a negative electrode is typically directly led out of a housing, where the housing and a jelly roll inside the battery are welded to achieve conduction between the housing and the jelly roll. However, due to possible presence of low-melting-point and low-boiling-point impurities on a surface of the housing, these impurities are prone to rapid vaporization during welding, and gas formed by vaporization is prone to breaking through a welding position and diffusing to the outside, resulting in formation of explosion points at the welding position. Moreover, penetrating explosion points cause an electrolyte inside the housing to flow out of the housing, affecting the safety performance of the battery.

### SUMMARY

Embodiments of this application aim to provide a battery, an electronic device, and a polarity lead-out method to improve the problem that explosion points are likely to occur during welding of the housing.

To solve the technical problem, the embodiments of this application adopt the following technical solution.

According to a first aspect, this application proposes a battery, including a housing and an electrode assembly accommodated in the housing, an inner surface of the housing is provided with a first welding zone, the first welding zone is configured to be electrically connected to the electrode assembly, the first welding zone includes a negative ion organic peak 118, an ion count ratio of the negative ion organic peak 118 is A1%, and A1≤0.5. The welding zone is a region enclosed by a welding trajectory.

In the above technical solution, the housing may be welded to the electrode assembly through the first welding zone to lead out a positive electrode or a negative electrode of the electrode assembly. A degree of impurities contained in the first welding zone may be defined by a content of an antirust agent component. The housing is cleaned to obtain the first welding zone. During cleaning, a main component obtained after thermal cracking of the antirust agent is triethanolamine, and a corresponding organic peak is 118. Since an ion count ratio of the negative ion organic peak 118 of the first welding zone is A1%, and A1≤0.5, an impurity content thereof is significantly reduced, and during welding of the housing and the electrode assembly, explosion point formation can be effectively reduced, thereby reducing the risk of electrolyte leakage of the battery to improve the safety performance of the battery.

In some preferred embodiments, the battery further includes a current collecting disc, and the current collecting disc is electrically connected between the housing and the electrode assembly. A surface of the current collecting disc facing the first welding zone is provided with a second welding zone, and the second welding zone is welded to the first welding zone. The second welding zone includes a negative ion organic peak 118, an ion count ratio of the negative ion organic peak 118 of the second welding zone is A2%, and A2≤0.5.

In the above technical solution, the current collecting disc is electrically connected between the housing and the electrode assembly, which can increase a current flow area and a current carrying capacity of the battery, thereby meeting the high-rate charge and discharge requirements of the battery. Moreover, the ion count ratios of the negative ion organic peaks 118 of the first welding zone and the second welding zone are both less than or equal to 0.5%, effectively reducing impurities in the first welding zone and the second welding zone. When the housing and the current collecting disc are welded, explosion point formation can be further reduced, thereby reducing the risk of electrolyte leakage of the battery to further improve the safety performance of the battery.

In some preferred embodiments, A1≤0.1, which can further reduce impurities in a first zone, thereby reducing explosion point formation during welding of the housing and the current collecting disc to improve the safety performance of the battery.

In some preferred embodiments, A2≤0.1, which can further reduce impurities in a second zone, thereby reducing explosion point formation during welding of the housing and the current collecting disc to improve the safety performance of the battery.

In some preferred embodiments, an inner surface of a bottom of the housing is provided with a first zone, and when viewed along a first direction, a projection of the first welding zone is at least partially located within a projection of the first zone, where the first direction is a direction from the bottom of the housing to the electrode assembly. The first welding zone may be directly welded to the electrode assembly or the current collecting disc, the first zone is a laser cleaning zone, and an ion count ratio of a negative ion organic peak 118 of the first zone is less than or equal to 0.5%. Since the first welding zone is at least partially located within the first zone, impurities in this portion can be reduced, thereby reducing explosion point formation during welding of the housing.

In some preferred embodiments, the projection of the first welding zone is entirely located within the projection of the first zone. The first welding zone is a part of the first zone, and impurities at all positions of the first welding zone can be reduced, thereby further reducing explosion point formation during welding of the housing.

In some preferred embodiments, a surface of the current collecting disc facing the bottom of the housing is provided with a second zone. When viewed along the first direction, a projection of the second welding zone is at least partially located within a projection of the second zone, and the first welding zone is at least partially located within the first zone, which can reduce impurities in this portion, thereby reducing explosion point formation during welding of the housing and the current collecting disc.

In some preferred embodiments, when viewed along the first direction, the projection of the second welding zone is entirely located within the projection of the second zone, thereby further reducing explosion point formation during welding of the housing and the current collecting disc.

In some preferred embodiments, the bottom of the housing includes a first portion and a second portion, the first zone is provided on the first portion, and when viewed along the first direction, a projection of the second portion does not overlap with a projection of the first portion. Along the first direction, a thickness of the first portion is T1, a thickness of the second portion is T2, and 6 µm≤T1-T2≤20 µm. After cleaning, a thickness of the housing does not decrease but slightly increases, such that the strength of the housing can be further enhanced, reducing the probability of burning through of the housing during welding.

Optionally, the current collecting disc includes a third portion and a fourth portion, the second zone is located on the third portion, and when viewed along the first direction, a projection of the third portion does not overlap with a projection of the fourth portion. Along the first direction, a thickness of the third portion is T3, a thickness of the fourth portion is T4, and 6 µm≤T3-T4≤20 µm. After cleaning, a thickness of the current collecting disc does not decrease but slightly increases, such that the strength of the current collecting disc can be further enhanced to facilitate welding to the housing.

In some preferred embodiments, 10 µm≤T1-T2≤18 µm, the thickness of the housing increases after cleaning, such that the strength of the housing can be further enhanced, further reducing the probability of burning through of the housing during welding.

In some preferred embodiments, 10 µm≤T3-T4≤18 µm, the strength of the current collecting disc can be further enhanced to facilitate welding to the housing.

In some preferred embodiments, a concentric distance between the first zone and the housing is C1, where C1≤0.5 mm; and/or a concentric distance between the second zone and the current collecting disc is C2, where C2≤0.5 mm. The cleaning zone is ensured to be located at the center of the housing or the current collecting disc as much as possible to facilitate direct welding to the first zone and the second zone during welding.

In some preferred embodiments, the first welding zone has a welding trajectory, and the welding trajectory is spiral-shaped or arc-shaped. The spiral shape or arc shape can increase a welding area, not only ensuring stable connection but also facilitating increase in current flow.

In some preferred embodiments, a circumscribed circle diameter of the welding trajectory is D, where 4 mm≤D≤6 mm, helping the projection of the first welding zone to fall into the above first zone and second zone, thereby reducing explosion point formation.

In some preferred embodiments, a trajectory length of the welding trajectory is L, where 8 mm≤L≤30 mm, further ensuring the welding area.

In some preferred embodiments, the first zone is annular, an inner diameter of the annular first zone is D1, 2 mm≤D1≤100 mm, an outer diameter of the annular first zone is D2, 5 mm≤D2≤200 mm, and the above size design of the first welding zone allows the first welding zone to fall into the first zone; and/or, the second zone is annular, an inner diameter of the annular second zone is D3, 2 mm≤D3≤100 mm, an outer diameter of the annular second zone is D4, and 5 mm≤D4≤200 mm, helping the second welding zone to fall into the second zone.

In some preferred embodiments, the first zone is circular, a diameter of the first zone is D5, and 5 mm≤D5≤100 mm; and/or, the second zone is circular, a diameter of the second zone is D6, and 5 mm≤D6≤100 mm.

According to a second aspect, this application further proposes an electronic device, including the battery as described in any embodiment of the first aspect.

According to a third aspect, this application further proposes a polarity lead-out method, including: providing a housing, and performing laser cleaning on an inner surface of the housing to obtain a first welding zone, where the first welding zone includes a negative ion organic peak 118, an ion count ratio of the negative ion organic peak 118 is A1%, and A1≤0.5; and providing an electrode assembly, where the electrode assembly is accommodated in the housing, the electrode assembly is welded to the first welding zone, and a positive electrode or a negative electrode of the electrode assembly is led out of the housing.

In some preferred embodiments, the above method further includes: providing a current collecting disc, where the current collecting disc is electrically connected to the electrode assembly; and performing laser cleaning on the current collecting disc to obtain a second welding zone, where the second welding zone is welded to the first welding zone of the housing, the second welding zone includes a negative ion organic peak 118, an ion count ratio of the negative ion organic peak 118 of the second welding zone is A2%, and A2≤0.5.

The foregoing description is merely an overview of the technical solutions of this application. In order to make the technical means of this application more clearly understood and to be implemented in accordance with the content of the specification, and to make the above and other objectives, features, and advantages of this application more obvious and easier to understand, specific embodiments of this application are particularly exemplified below.

### BRIEF DESCRIPTION OF DRAWINGS

One or more embodiments are exemplarily illustrated by the accompanying drawings corresponding thereto, and these exemplary illustrations do not constitute limitations on some embodiments. Elements having the same reference numerals in the drawings represent similar elements. Unless otherwise specified, the figures in the accompanying drawings do not constitute proportional limitations.
FIG. 1 is an exploded view of a battery according to some embodiments of this application;
FIG. 2 is a cross-sectional view of a battery according to some embodiments of this application;
FIG. 3 is a schematic diagram of a wound structure of an electrode assembly according to some embodiments of this application;
FIG. 4 is a partial enlarged view at location B in FIG. 2 according to some embodiments of this application;
FIG. 5 is a schematic diagram of cleaning of a first zone at a bottom of a housing according to some embodiments of this application;
FIG. 6 is a schematic structural diagram of a bottom of a housing according to some embodiments of this application;
FIG. 7 is a schematic structural diagram of a weld line trajectory according to some embodiments of this application;
FIG. 8 is a schematic diagram of cleaning of a first zone at a bottom of a housing according to some embodiments of this application;
FIG. 9 is a schematic diagram of cleaning of a first zone at a bottom of a housing according to some embodiments of this application;
FIG. 10 is an analysis diagram of thermal cracking of an antirust agent according to some embodiments of this application;
FIG. 11 is a schematic diagram of a bottom of a housing before and after laser cleaning according to some embodiments of this application; and
FIG. 12 is a schematic diagram of a bottom of a housing after laser cleaning according to some embodiments of this application.

### Description of reference signs:

100. battery;
10. housing; 11. accommodating cavity; 12. first opening; 13. bottom of housing; 131. first zone; 132. first welding zone; 1322. welding trajectory; 133. first portion; 134. second portion;
20. electrode assembly; 21. first electrode plate; 22. second electrode plate; 23. separator;
30. current collecting disc; 31. second zone; 32. second welding zone; 33. third portion; 34. fourth portion;
40. cover plate; 41. pole;
50. top current collecting member; and
Z. first direction.

### DETAILED DESCRIPTION

Some embodiments of the technical solutions of this application will be described in detail below with reference to the accompanying drawings. The following embodiments are only used to more clearly illustrate the technical solutions of this application and thus are merely exemplary and cannot be used to limit the protection scope of this application.

It should be noted that when an element is described as being "fixed to" or "provided on" another element, it can be directly on the another element or there may be one or more intervening elements. When an element is described as being "connected" or "welded" to another element, it can be directly connected/welded to the another element or there may be one or more intervening elements.

In the description of some embodiments of this application, the orientation or positional relationship indicated by technical terms such as "upper", "lower", "top", "bottom", "inner", and "outer" is based on the orientation or positional relationship shown in the accompanying drawings, which is merely for facilitating the description of some embodiments of this application and simplifying the description, rather than indicating or implying that the apparatus or element referred to must have a specific orientation, be constructed and operated in a specific orientation, and therefore cannot be understood as limiting some embodiments of this application.

In the description of some embodiments of this application, technical terms such as "first" and "second" are only used to distinguish different objects and cannot be understood as indicating or implying relative importance or implicitly indicating the number, specific order, or primary and secondary relationship of the indicated technical features. In the description of some embodiments of this application, "multiple" means two or more, unless otherwise clearly and specifically defined.

In the description of some embodiments of this application, the term "and/or" is merely an association describing associated objects, indicating that three relationships may exist, for example, A and/or B may indicate: only A is present, A both and B are present, and only B is present. In addition, the character "/" in this text generally indicates that the contextually associated objects are in an "or" relationship.

Reference to "embodiment" in this text means that a particular feature, structure, or characteristic described in combination with this embodiment can be included in at least one embodiment of this application. The appearance of this phrase in various places in the specification does not necessarily refer to the same embodiment, nor is it an independent or alternative embodiment that is mutually exclusive with other embodiments. Furthermore, the technical features involved in different embodiments of this application described below can be combined with each other as long as there is no conflict between them.

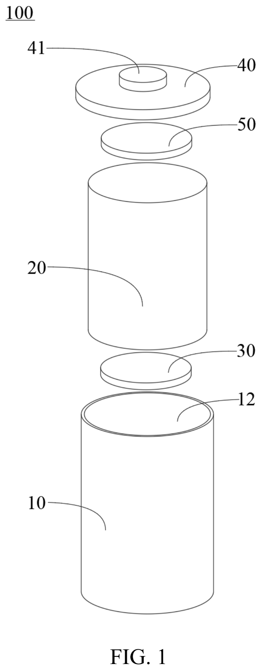

According to a first aspect, this application proposes a battery 100. Referring to FIG. 1, the battery 100 includes a housing 10, an electrode assembly 20, and a current collecting disc 30. The electrode assembly 20 is accommodated in the housing 10, and the current collecting disc 30 is electrically connected between the housing 10 and the electrode assembly 20.

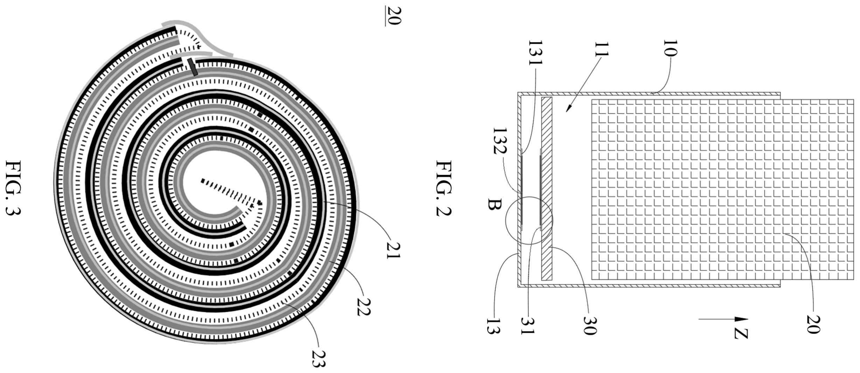

For the above housing 10, referring to FIG. 1 and FIG. 2, the housing 10 encloses an accommodating cavity 11, and the accommodating cavity 11 can accommodate the above electrode assembly 20 and an electrolyte (not shown in the figures). For example, a first opening 12 is provided at a top of the housing 10, the above electrode assembly 20 can be provided in the housing 10 through the first opening 12, and the first opening 12 is covered by a cover plate 40 to seal the accommodating cavity 11. A pole 41 can be provided on the cover plate 40, the electrode assembly 20 is electrically connected to the pole 41, for example, being electrically connected to the pole 41 through a top current collecting member 50, and the pole 41 extends out of the accommodating cavity 11 to lead out a positive electrode or a negative electrode of the electrode assembly 20.

In some embodiments, the housing 10 may be formed by punching a single layer of metal sheet, and a thickness of the metal sheet may be set to 0.1 mm to 0.4 mm, such that the housing 10 has better punching strength while the energy density of the battery 100 is increased. A material of the metal sheet may be a conductive metal material such as aluminum, steel, stainless steel, nickel, copper, or magnesium alloy, which makes the housing 10 capable of leading out a specific polarity of the battery 100, for example, the housing 10 serves as a positive electrode or negative electrode of the battery 100. Specifically, the above pole 41 may lead out the positive electrode of the electrode assembly 20, and the negative electrode of the electrode assembly 20 may be directly electrically connected to the housing 10, with the negative electrode of the electrode assembly 20 being led out of the housing 10. Alternatively, the negative electrode is led out of the pole 41, and the positive electrode is led out of the housing 10.

For the above electrode assembly 20, referring to FIG. 2 and FIG. 3, FIG. 3 shows the electrode assembly 20 which is a wound structure. The electrode assembly 20 includes a first electrode plate 21, a second electrode plate 22, and a separator 23. The first electrode plate 21, the second electrode plate 22, and the separator 23 are stacked and wound to form a wound electrode assembly 20. The first electrode plate 21 and the second electrode plate 22 have opposite polarities, for example, the first electrode plate 21 is a positive electrode plate, the second electrode plate 22 is a negative electrode plate, and the separator 23 is provided between the first electrode plate 21 and the second electrode plate 22 to separate them. In some other embodiments, the first electrode plate 21 may alternatively be a negative electrode plate, and the second electrode plate 22 is a positive electrode plate.

For the above separator 23, referring to FIG. 3, the separator 23 is provided between the first electrode plate 21 and the second electrode plate 22 to separate the first electrode plate 21 from the second electrode plate 22. The separator 23 may be a high-adhesion separator 23, that is, the separator 23 is adhered between the first electrode plate 21 and the second electrode plate 22 to help to enhance the overall bonding strength of the electrode assembly 20, thereby reducing the risk of failure caused by drop or collision of the battery 100. Alternatively, in some other embodiments, a surface of the separator 23 facing the first electrode plate 21 is provided with a first adhesive layer (not shown in the figures), and the first adhesive layer is adhered between the separator 23 and the first electrode plate 21. A surface of the separator 23 facing the second electrode plate 22 is provided with a second adhesive layer (not shown in the figures), and the second adhesive layer is adhered between the separator 23 and the second electrode plate 22. The separator 23 may be one or more of a polyethylene separator, a ceramic-containing polyethylene coated separator, an adhesive-containing polyethylene coated separator, a polypropylene separator, and a polypropylene coated separator.

For the above current collecting disc 30, referring to FIG. 1 and FIG. 2, the current collecting disc 30 is electrically connected to the electrode assembly 20 in the housing 10, for example, the current collecting disc 30 is provided at a bottom of the accommodating cavity 11 and electrically connected between the housing 10 and the electrode assembly 20. The electrode assembly 20 further includes a first tab (not shown in the figures) and a second tab (not shown in the figures) having opposite polarities, the first tab is electrically connected to the above first electrode plate 21, and the second electrode plate 22 is electrically connected to the above second electrode plate 22. After the above electrode plates and separator 23 are wound to form the electrode assembly 20, the first tab may extend from an upper end of the electrode assembly 20, and the second tab may extend from a lower end. The second tab at the lower end may be flattened to form a flattened surface at a lower end surface of the electrode assembly 20, and the current collecting disc 30 may be directly welded between the flattened surface and the bottom 13 of the housing. Similarly, the first tab at the upper end may be flattened to form another flattened surface at an upper end surface of the electrode assembly 20, and the above top current collecting member 50 may be directly welded between the upper flattened surface and the cover plate 40.

For the electrical connection between the housing 10 and the electrode assembly 20, the housing 10 may be electrically connected to the above second tab, the flattened surface formed by the second tab, or the above current collecting disc 30 by welding. It can be understood that when the battery 100 does not employ the current collecting disc 30, the housing 10 may be directly welded to the second tab or the flattened surface formed by the second tab to lead out one polarity of the battery 100. In some embodiments of this application, the current collecting disc 30 may be employed, the current collecting disc 30 is electrically connected between the housing 10 and the electrode assembly 20, and the current collecting disc 30 may be first electrically connected to the electrode assembly 20. This electrical connection manner includes but is not limited to welding or conductive adhesive connection, and then the current collecting disc 30 is welded to the housing 10. The provision of the current collecting disc 30 can increase the current flow area and a current carrying capacity of the battery 100, thereby helping to meet the high-rate charge and discharge requirements of the battery 100.

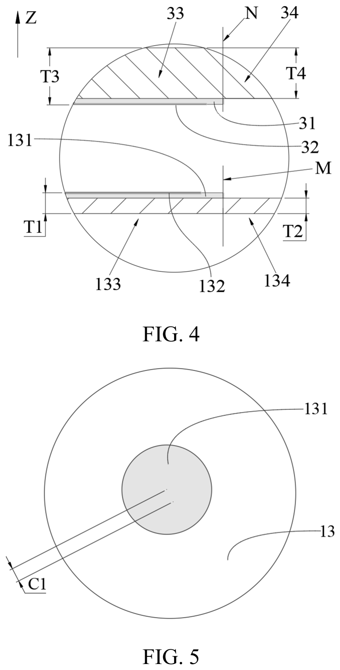

When the housing 10 is directly welded to the second tab of the electrode assembly 20 or the flattened surface formed by the second tab, for example, when the housing 10 is provided with a first welding zone 132 (referring to FIG. 4), high energy is applied to an outer surface of the housing 10, high energy is outputted to form a molten pool that is molten on the surface of the housing 10, and the molten pool extends through the housing 10 and acts with the second tab or the flattened surface, such that the second tab or the flattened surface formed by the second tab also forms a molten pool, and after the molten pool rapidly solidifies, the housing 10 is fixedly welded to the second tab or the flattened surface formed by the second tab. The molten pool on the inner surface of the housing 10 forms the first welding zone 132, and the first welding zone 132 is directly welded to the electrode assembly 20.

When the current collecting disc 30 is employed to be welded to the housing 10, for example, when the current collecting disc 30 is provided with a second welding zone 32 (referring to FIG. 4), high energy is applied to the outer surface of the housing 10, high energy is outputted to form a molten pool that is molten on the surface of the housing 10, and the molten pool extends through the housing 10 and acts with the current collecting disc 30, such that the surface of the current collecting disc 30 also forms a molten pool; and after the molten pool rapidly solidifies, the housing 10 and the current collecting disc 30 are connected together to form one electrode of the battery 100. The molten pool on the outer surface of the current collecting disc 30 forms the second welding zone 32.

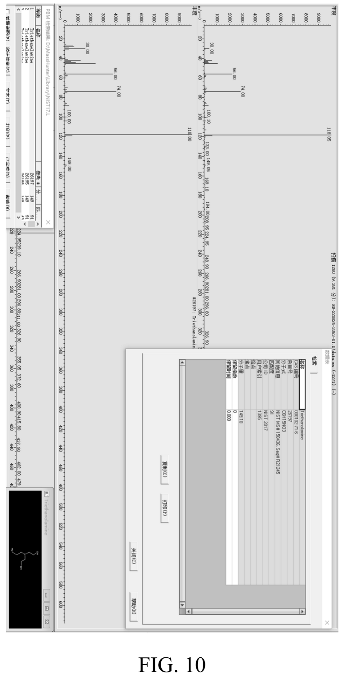

Referring to FIG. 2 and FIG. 4, an inner surface of the bottom 13 of the housing is provided with a first zone 131. In secondary ion mass spectrometry testing, the first zone 131 includes a negative ion organic peak 118, an ion count ratio of the negative ion organic peak 118 is A1%, and A1≤0.5. For example, the first zone 131 is provided on the inner surface of the bottom 13 of the housing by laser cleaning, mechanical scraping, chemical cleaning, or the like. Taking laser cleaning as an example, the bottom 13 of the housing is subjected to laser cleaning to obtain the first zone 131, and impurities on the surface of the first zone 131 can be removed by laser cleaning. A degree of cleaning can be defined by a content of an antirust agent component on the surface of the housing 10. The antirust agent includes triethanolamine, and a main component obtained after thermal cracking is triethanolamine. For example, by laser cleaning, triethanolamine is rapidly volatilized or rapidly vaporized under high temperature, such that a content of triethanolamine is reduced. In secondary ion mass spectrometry testing (one display mode of substances in the spectrum, where a specific substance of this peak can be determined based on a specific peak value), the content of triethanolamine can roughly reflect the impurity content, and an insufficient cleaning degree means a higher triethanolamine content and more impurities. An organic peak corresponding to triethanolamine is 118, and a good cleaning effect can be achieved by controlling a component of the organic peak 118 to be less than or equal to 0.5%. Referring to FIG. 10, it can be seen from FIG. 10 that the organic peak 118 after thermal cracking corresponds to triethanolamine fragments. It can be understood that the formation of the first zone 131 is not limited to the above laser cleaning, mechanical scraping, chemical cleaning, or the like, as long as some impurities on the surface of the first zone 131 can be reduced to satisfy that the ion count ratio of the negative ion organic peak 118 of the first zone 131 is less than or equal to 0.5%.

Still referring to FIG. 2 and FIG. 4, the bottom 13 of the housing is further provided with a first welding zone 132, the first welding zone 132 is a region enclosed by a welding trajectory, and the first welding zone 132 is configured to be welded to the current collecting disc 30 or the electrode assembly 20. For example, high energy acts on the first welding zone 132 of the housing 10, and a molten pool is formed in the first welding zone 132 such that the housing 10 is directly fixedly welded to the electrode assembly 20 or fixedly welded to the current collecting disc 30.

When viewed along a direction from the bottom 13 of the housing to the electrode assembly 20 (a first direction Z), a projection of the first welding zone 132 is at least partially located within a projection of the first zone 131. The first zone 131 formed by laser cleaning, mechanical scraping, chemical cleaning, or the like has significantly reduced surface impurities, the first welding zone 132 falls into the first zone 131, that is, the first welding zone 132 includes a negative ion organic peak 118, an ion count ratio of the negative ion organic peak 118 is A1%, and A1≤0.5. Therefore, during welding of the housing 10, explosion points can be effectively reduced to ensure the safety performance of the battery 100.

In some embodiments, the projection of the first welding zone 132 is entirely located within the projection of the first zone 131. The first welding zone 132 is a part of the first zone 131, and impurities at all positions of the first welding zone 132 can be reduced, thereby further reducing explosion point formation during welding of the housing 10.

Preferably, when the current collecting disc 30 is employed, a surface of the current collecting disc 30 facing the bottom 13 of the housing is provided with a second zone 31, the second zone 31 includes a negative ion organic peak 118, an ion count ratio of the negative ion organic peak 118 is A2%, and A2≤0.5. The second zone 31 may also be formed on the current collecting disc 30 by laser cleaning, mechanical scraping, chemical cleaning, or the like, and impurities on the surface of the second zone 31 can be removed by laser cleaning. When viewed along the first direction Z, the projection of the first zone 131 at least partially overlaps with a projection of the second zone 31, helping the welding zone to be located in a portion where projections of the first zone 131 and the second zone 31 overlap. The ion count ratios of the negative ion organic peaks 118 of the first zone 131 and the second zone 31 are both less than or equal to 0.5%, which can effectively reduce impurities in the first zone 131 and the second zone 31.

A surface of the current collecting disc 30 facing the housing 10 is provided with a second welding zone 32, the second welding zone 32 is a region enclosed by a welding trajectory, and the second welding zone 32 is welded to the first welding zone 132. When viewed along the first direction Z, a projection of the second welding zone 32 is at least partially located within the projection of the second zone 31, and the second welding zone 32 falls into the first zone 131, that is, the second welding zone 32 includes a negative ion organic peak 118, an ion count ratio of the negative ion organic peak 118 is A2%, and A2%≤0.5%. Impurities in the first welding zone 132 and the second welding zone 32 can be effectively reduced. When the housing 10 and the current collecting disc 30 are welded, explosion point formation can be further reduced, thereby reducing the risk of electrolyte leakage of the battery 100 to further improve the safety performance of the battery 100.

In some embodiments, when viewed along the first direction Z, the projection of the second welding zone 32 is entirely located within the projection of the second zone 31. The second welding zone 32 is a part of the second zone 31, and impurities at all positions of the second welding zone 32 can be reduced, thereby further reducing explosion point formation during welding of the housing 10.

In a region where projections of the first welding zone 132 and the second welding zone 32 overlap, impurities at the welding positions of both the housing 10 or the current collecting disc 30 are significantly reduced. When the housing 10 and the current collecting disc 30 are welded, explosion point formation can be further reduced, thereby reducing the risk of electrolyte leakage of the battery 100 to further improve the safety performance of the battery 100.

Further, A1≤0.1. The ion count ratio of the negative ion organic peak 118 is reduced to be less than 0.1% through cleaning, so that impurities in the first zone 131 can be further reduced, thereby reducing explosion point formation during welding of the housing 10 and the electrode assembly 20 or the current collecting disc 30 to improve the safety performance of the battery 100. Further, A2≤0.1, which can further reduce impurities in the second zone 31 to improve the safety performance of the battery 100.

Still referring to FIG. 2 and FIG. 4, the bottom 13 of the housing includes a first portion 133 and a second portion 134 (in FIG. 4, the first portion 133 and the second portion 134 are separated by a straight line M). The first zone 131 is provided on the first portion 133, and when viewed along the first direction Z, a projection of the second portion 134 does not overlap with a projection of the first portion 133. For example, the first portion 133 is located at a central position of the bottom 13 of the housing, and the second portion 134 is provided surrounding the first portion 133. Laser cleaning is performed on the first portion 133 to form the first zone 131 in the first portion 133, thereby reducing surface impurities in the first zone 131.

For thicknesses of the first portion 133 and the second portion 134 (thicknesses along the first direction Z), after laser cleaning, a thickness difference between these two portions may change. Along the first direction Z, the thickness of the first portion 133 is T1, the thickness of the second portion 134 is T2, and 6 µm≤T1-T2≤20 µm. After laser cleaning, the thickness of the housing 10 does not decrease but slightly increases. Laser cleaning is implemented by applying a high-energy laser beam to a material surface, such that low-boiling-point substances are rapidly vaporized and removed, while the material undergoes melting and then solidification, and during the solidification, the material accumulates to cause a slight increase in thickness. Preferably, 10 µm≤T1-T2≤18 µm, which is beneficial to reducing a burning-through rate at the bottom 13 of the housing during welding.

Similarly, when the current collecting disc 30 is employed, the current collecting disc 30 includes a third portion 33 and a fourth portion 34 (in FIG. 4, the third portion 33 and the fourth portion 34 are separated by a straight line N), and the second zone 31 is located on the third portion 33. When viewed along the first direction Z, a projection of the third portion 33 does not overlap with a projection of the fourth portion 34, and the fourth portion 34 may also be provided surrounding the third portion 33. Along the first direction Z, a thickness of the third portion 33 is T3, a thickness of the fourth portion 34 is T4, and 6 µm≤T3-T4≤20 µm. After cleaning, the thickness of the current collecting disc 30 does not decrease but slightly increases, which facilitates welding to the housing 10. Preferably, 10 µm≤T3-T4≤18 µm.

Laser cleaning mainly includes cleaning of the housing 10 and cleaning of the current collecting disc 30. Cleaning of the housing 10 refers to cleaning of the inner surface of the bottom 13 of the housing, and the inner surface is a surface attached to the current collecting disc 30. Dirt on the surface attached to the current collecting disc 30 leads to formation of penetrating explosion points. Referring to FIG. 5, the cleaning needs to satisfy that: a concentric distance between a cleaning zone (the first zone 131) and the bottom 13 of the housing is C1, and C1≤0.5 mm; and/or when the current collecting disc 30 is employed, a concentric distance (not shown in the figure) between the second zone 31 and the current collecting disc 30 is C2, and C2≤0.5 mm. The cleaning zone is ensured to be located at the center of the bottom 13 of the housing or the current collecting disc 30 as much as possible, helping the first welding zone 132 and the second welding zone 32 to fall into the first zone 131 and the second zone 31 during welding.

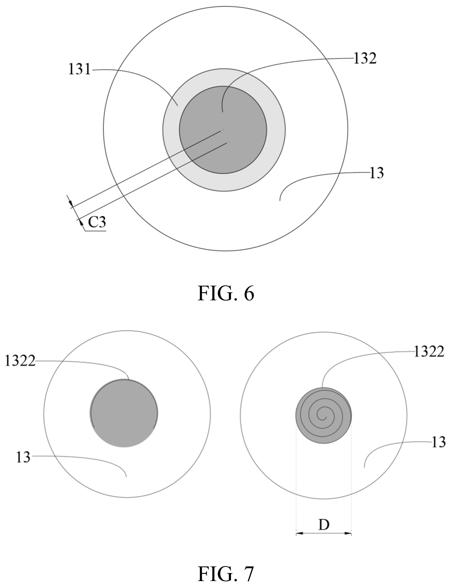

Referring to FIG. 6, a concentric distance between the first welding zone 132 and the bottom 13 of the housing is C3, and C3≤0.9 mm, helping the first welding zone 132 to be able to be welded to both the first zone 131 and the second zone 31. Further referring to FIG. 7, the first welding zone 132 has a welding trajectory 1322, the first welding zone 132 is a region enclosed by the welding trajectory, and the welding trajectory 1322 is spiral-shaped or arc-shaped. The spiral shape or arc shape can increase a welding area, not only ensuring stable connection but also facilitating increase in current flow. Optionally, a trajectory length of the welding trajectory 1322 is L (not shown in the figure), and 8 mm≤L≤30 mm, further ensuring the welding area.

Optionally, a circumscribed circle diameter of the welding trajectory 1322 is D, and 4 mm≤D≤6 mm, helping the first welding zone 132 to fall into the above first zone 131 and second zone 31, thereby reducing explosion point formation.

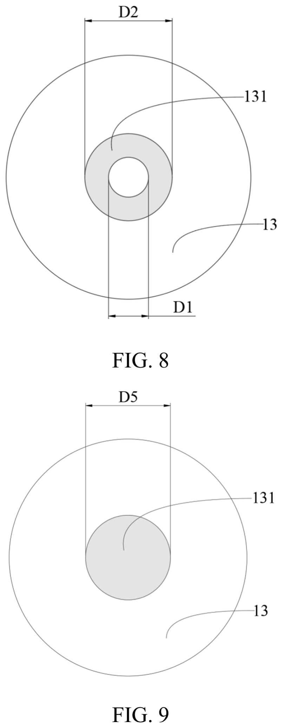

In some embodiments, referring to FIG. 8, the first zone 131 is annular, an inner diameter of the annular first zone 131 is D1, 2 mm≤D1≤100 mm, an outer diameter of the annular first zone 131 is D2, and 5 mm≤D2≤200 mm. The above size design of the first welding zone 132 can help the first welding zone 132 to fall into the first zone 131.

Optionally, when the current collecting disc 30 is employed, the second zone 31 is annular, an inner diameter of the annular second zone 31 (not shown in the figure) is D3, 2 mm≤D3≤100 mm, an outer diameter of the annular second zone 31 is D4, and 5 mm≤D4≤200 mm, helping the first welding zone 132 to fall into the second zone 31.

In some other embodiments, referring to FIG. 9, the first zone 131 is circular, a diameter of the first zone 131 is D5, and 5 mm≤D5≤7 mm. Optionally, when the current collecting disc 30 is employed, the second zone 31 is circular, a diameter of the second zone 31 is D6, and 5 mm≤D6≤7 mm. The first zone 131 and the second zone 31 are actually diversified in shape, which is not limited in this application.

In some embodiments of this application, the housing 10 may be welded to the electrode assembly 20 through the first welding zone 132 to lead out the positive electrode or negative electrode of the electrode assembly 20. The degree of impurities contained in the first welding zone 132 may be defined by the content of the antirust agent component. The housing 10 is cleaned to obtain the first welding zone 132. During cleaning, the main component obtained after thermal cracking of the antirust agent is triethanolamine, and the corresponding organic peak is 118. Since the ion count ratio of the negative ion organic peak 118 of the first welding zone 132 is A1%, and A1≤0.5, the impurity content thereof is significantly reduced, and during welding of the housing 10 and the electrode assembly 20, explosion point formation on the housing 10 can be effectively reduced, thereby reducing the risk of electrolyte leakage of the battery 100 to improve the safety performance of the battery 100.

In some embodiments of this application, taking a steel-shell battery as an example, time-of-flight-secondary ion mass spectrometry testing is performed on the bottom of the housing.

In Example 1, laser cleaning is performed on the bottom of the housing, the cleaning is performed in an arc shape (a ring shape), and the cleaning is performed to a degree at which the surface of the housing is whitened.

In Example 2, laser cleaning is performed on the bottom of the housing, the cleaning is performed in an arc shape (a ring shape), and the cleaning is performed to a degree at which the surface of the housing is molten.

In Example 3, laser cleaning is performed on the bottom of the housing, the cleaning is performed in an arc shape (a ring shape), and the cleaning is performed to a degree at which the surface of the housing is molten.

In Example 4, laser cleaning is performed on the bottom of the housing, the cleaning is performed in an arc shape (a ring shape), and the cleaning is performed to a degree at which the surface of the housing is molten.

In Example 5, laser cleaning is performed on the bottom of the housing, the cleaning is performed in an arc shape (a ring shape), and the cleaning is performed to a degree at which the surface of the housing is molten.

In Comparative Example 1, no cleaning is performed.

In Comparative Example 2, laser cleaning is performed on the bottom of the housing, the cleaning is performed in an arc shape (a ring shape), and the cleaning is performed until there is no trace.

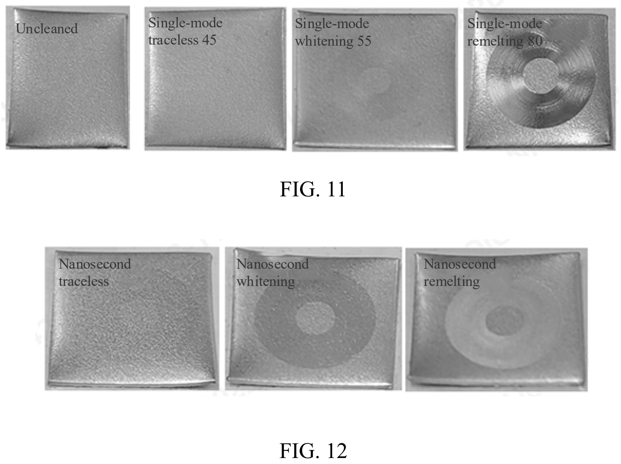

For the cleaning degree about the above-mentioned no trace, being whitened, and being molten, reference may be made to FIG. 11 and FIG. 12.

In a measurement method, a surface of a sample is excited using tof-SIMS (Time of Flight Secondary Ion Mass Spectrometry) with primary ions, to eject a trace amount of secondary ions, and an ion mass is determined based on a time for the secondary ions to fly to a detector based on different masses.

Test principle: stable bombardment is performed on the sample with a focused primary ion beam, secondary ions are generated on a target surface, the secondary ions after mass spectrometry separation are collected, then the elemental composition and distribution of the surface and body of the sample can be known, and mass spectrometry separation of ionized secondary particles (sputtered atoms, molecules, atomic groups, or the like.) is implemented based on a mass-to-charge ratio. The main component corresponding to thermal cracking of the antirust agent is triethanolamine, corresponding to the organic peak 118, and a cleaning effect can be determined based on the component of the organic peak 118.

Explosion point test method: the housing and the flattened surface of the electrode assembly are directly subjected to penetration welding (a welding position penetrates through the cleaning zone), and a complete sample battery is prepared. In an early stage, explosion point samples with various features are collected through manual visual inspection, then these explosion point features are written into CCD recognition software by deep learning of CCD, and explosion points are automatically recognized by algorithms. The relevant data of the ion count ratio of the housing is shown in Table 1 below.

**Table 1**

| Ion count ratio | CₓH_{y} (%) | | | | Oxygen-containing organic matter (%) | | Organic peak 118 (A1%) | Explosion point proportion |
|---|---|---|---|---|---|---|---|---|
| Group | C₂H₅ | C₃H₅ | C₃H₇ | CH | C₂H₂O₂ | C₃H₃O₂ | | |
| Comparative Example 1 (uncleaned) | 2.52 | 4.14 | 2.72 | 5.36 | 0.19 | 0.34 | 2.31 | 1.1% |
| Comparative Example 2 | 3.43 | 5.6 | 3.33 | 6.58 | 0.18 | 0.35 | 0.59 | 0.20% |
| Example 1 | 3.65 | 5.65 | 3.32 | 5.31 | 0.41 | 0.54 | 0.50 | 0.10% |
| Example 2 | 4.06 | 6.3 | 4.16 | 8.42 | 0.49 | 0.75 | 0.07 | 0.040% |
| Example 3 | 3.62 | 5.54 | 3.38 | 5.27 | 0.42 | 0.55 | 0.13 | 0.048% |
| Example 4 | 4.1 | 6.5 | 4 | 8.31 | 0.48 | 0.73 | 0.10 | 0.042% |
| Example 5 | 3.74 | 5.92 | 3.87 | 6.46 | 0.41 | 0.61 | 0.36 | 0.068% |

From the above Table 1, it can be seen the material with the negative ion organic peak 118 at the bottom of the housing can be effectively removed through laser cleaning, achieving a significant removal effect. As compared to the uncleaned group, laser cleaning can significantly reduce the proportion of the negative ion organic peak 118, thereby reducing some easily vaporizable impurities on the surface of the housing, and during welding of the housing, explosion point formation can be effectively reduced.

With reference to the above Table 1, it can be seen that a smaller ion count ratio of the negative ion organic peak 118 at the bottom of the housing indicates a smaller explosion point proportion. When the ion count ratio of the organic peak 118 at the bottom of the housing is less than or equal to 0.50%, the explosion point proportion can be reduced to below 0.1%. Thus, in this application, the ion count ratio of the negative ion organic peak 118 is selected as A1%, and A1≤0.5. With reference to Example 2 and Example 4, it can be seen that when the ion count ratio of the organic peak 118 is less than or equal to 0.1%, the explosion point proportion is reduced to below 0.042%. Therefore, in this application, it is further preferable that A1≤0.10.

In some embodiments of this application, taking a steel-shell battery as an example, time-of-flight-secondary ion mass spectrometry testing is performed on the bottom of the housing and the current collecting disc.

In Example 6, based on the structure in the above Example 2, laser cleaning is performed on the current collecting disc, the cleaning is both performed in an arc shape (a ring shape), and the cleaning is performed to a degree at which the surface of the housing is whitened and the surface of the current collecting disc is whitened.

In Example 7, based on the structure in the above Example 2, laser cleaning is performed on the current collecting disc, the cleaning is both performed in an arc shape (a ring shape), and the cleaning is performed to a degree at which the surface of the housing is molten and the surface of the current collecting disc is molten.

In Example 8, based on the structure in the above Example 2, laser cleaning is performed on the current collecting disc, the cleaning is both performed in an arc shape (a ring shape), and the cleaning is performed to a degree at which the surface of the housing is whitened and the surface of the current collecting disc is whitened.

In Example 9, based on the structure in the above Example 2, laser cleaning is performed on the current collecting disc, the cleaning is both performed in an arc shape (a ring shape), and the cleaning is performed to a degree at which the surface of the housing is molten and the surface of the current collecting disc is molten.

In Example 10, based on the structure in the above Example 2, laser cleaning is performed on the current collecting disc, the cleaning is both performed in an arc shape (a ring shape), and the cleaning is performed to a degree at which the surface of the housing is molten and the surface of the current collecting disc is molten.

In Example 11, based on the structure in the above Example 2, no cleaning is performed on the current collecting disc.

In Example 12, based on the structure in the above Example 2, laser cleaning is performed on the current collecting disc, the cleaning is performed in an arc shape (a ring shape), and the cleaning is performed until there is no trace.

After laser cleaning of the housing and the current collecting disc, secondary ion mass spectrometry testing can be performed on their cleaning positions respectively to obtain an average of the ion count ratios thereof. Alternatively, after welding of the housing and the current collecting disc, testing is performed in a cleaning zone (a non-weld point or weld line position) where the housing and the current collecting disc are welded, and in this case, the ion count ratio of the housing or the current collecting disc is directly obtained. In this application, the average of them is taken as an example, and the relevant data is shown in Table 2 below.

**Table 2**

| Ion count ratio | CₓH_{y} (%) | | | | Oxygen-containing organic matter (%) | | Organic peak 118 (A2%) | Explosion point proportion |
|---|---|---|---|---|---|---|---|---|
| Group | C₂H₅ | C₃H₅ | C₃H₇ | CH | C₂H₂O₂ | C₃H₃O₂ | | |
| Example 6 | 3.73 | 5.64 | 3.41 | 5.29 | 0.42 | 0.54 | 0.50 | 0.031% |
| Example 7 | 4.01 | 6.1 | 4.08 | 8.35 | 0.46 | 0.74 | 0.06 | 0.015% |
| Example 8 | 3.64 | 5.51 | 3.36 | 5.18 | 0.45 | 0.62 | 0.15 | 0.021% |
| Example 9 | 4.3 | 6.7 | 4.2 | 8.33 | 0.54 | 0.76 | 0.10 | 0.017% |
| Example 10 | 3.72 | 5.96 | 3.85 | 6.54 | 0.47 | 0.57 | 0.34 | 0.026% |
| Example 11 | 2.56 | 4.12 | 2.77 | 5.31 | 0.12 | 0.34 | 2.28 | 0.039% |
| Example 12 | 3.48 | 5.62 | 3.38 | 6.51 | 0.19 | 0.39 | 0.62 | 0.033% |

With reference to the above Table 1 and Table 2, it can be seen that when laser cleaning is performed on both the bottom of the housing and the current collecting disc, the explosion point proportion can be further reduced. The surface of the bottom of the housing facing the current collecting disc is subjected to laser cleaning to obtain the first zone, and the surface of the current collecting disc facing the housing is subjected to laser cleaning to obtain the second zone. The current collecting disc is attached to the bottom of the housing, and in this case, the first zone and the second zone also at least partially overlap. During welding, the welding position is in the portion where the first zone and the second zone overlap. For example, penetration welding is employed, high energy is outputted to form a molten pool in this portion, and the molten pool extends through the housing and the current collecting disc. After the molten pool solidifies, the housing and the current collecting disc can be fixedly welded. Since the welding position is in the portion where the first zone and the second zone overlap, impurities and easily vaporizable substances on both the housing or the current collecting disc are significantly reduced, which can improve the cleanliness of an attachment zone, effectively reducing explosion point formation, thereby reducing the risk of electrolyte leakage of the battery and improving the safety performance of the battery.

With reference to the above Table 1 and Table 2, it can be seen that a smaller ion count ratio of the organic peak 118 of the housing and the current collecting disc indicates a smaller explosion point proportion. When A1≤0.5 and A2≤0.5, the explosion point proportion can be further reduced; therefore, in this application, it is set that A1≤0.5 and A2≤0.5. With reference to Example 7 and Example 9, it can be seen that when A1≤0.1 and A2≤0.1, the explosion point proportion can be reduced to below 0.017%. Therefore, in this application, it is further preferable that A1≤0.1 and A2≤0.1.

According to a second aspect, this application further proposes an electronic device, including the battery as described in any embodiment of the first aspect. The electronic device in some embodiments of this application is not particularly limited and may be any known electronic device in the prior art. For example, the electronic device includes but is not limited to Bluetooth earphones, mobile phones, tablets, notebook computers, electric toys, electric tools, electric bicycles, electric vehicles, ships, and spacecraft. The electric toys may include fixed or mobile electric toys, such as game consoles, electric vehicle toys, electric ship toys, and electric airplane toys, and the spacecraft may include airplanes, rockets, space shuttles, and spaceships.

According to a third aspect, this application further proposes a polarity lead-out method. One embodiment of the method includes the following steps.

S10. Provide a housing, and perform laser cleaning on an inner surface of the housing to obtain a first welding zone, where the first welding zone includes a negative ion organic peak 118, an ion count ratio of the negative ion organic peak 118 is A1%, and A1≤0.5.

The first welding zone refers to a position where the housing and the electrode assembly are welded. To ensure that the first welding zone is completely cleaned, the first zone can be obtained in a manner of cleaning. When viewed along the first direction Z, the projection of the first welding zone entirely falls within a projection range of the first zone, to ensure that the first welding zone is completely cleaned.

S20. Provide an electrode assembly, where the electrode assembly is accommodated in the housing, the electrode assembly is welded to the first welding zone, and a positive electrode or a negative electrode of the electrode assembly is led out of the housing.

The housing is welded to the electrode assembly to lead out the positive electrode or negative electrode of the electrode assembly. For example, an electrochemical apparatus further includes a tab or a pole, and the positive electrode of the electrode assembly is led out of the tab or pole, while the negative electrode is led out of the housing. In some other embodiments, the negative electrode of the electrode assembly may also be led out of the tab or pole, while the positive electrode is led out of the housing.

In some embodiments, the current collecting disc may alternatively be electrically connected between the housing and the electrode assembly.

S30. Provide a current collecting disc, where the current collecting disc is electrically connected to the electrode assembly; and perform laser cleaning on the current collecting disc to obtain a second welding zone, where the second welding zone is welded to the first welding zone, where the second welding zone includes a negative ion organic peak 118, an ion count ratio of the negative ion organic peak 118 of the second welding zone is A2%, and A2≤0.5.

Electrically connecting the current collecting disc between the housing and the electrode assembly can increase a current flow area and a current carrying capacity of the battery, thereby meeting the high-rate charge and discharge requirements of the battery. Moreover, the ion count ratios of the negative ion organic peak 118 of the first welding zone and the second welding zone are both less than or equal to 0.5%, which can effectively reduce impurities in the first welding zone and the second welding zone. When the housing and the current collecting disc are welded, explosion point formation can be further reduced, thereby reducing the risk of electrolyte leakage of the battery to further improve the safety performance of the battery.

In conclusion, it should be noted that: the above embodiments are only used to illustrate the technical solutions of this application and are not intended to limit them. Under the idea of this application, the technical features in the above embodiments or different embodiments can also be combined with each other, the steps can be implemented in any order, and there are many other variations of the different aspects of this application as described above. For brevity, they are not provided in detail. Although this application has been described in detail with reference to the foregoing embodiments, those of ordinary skill in the art should understand that: modifications can still be made to the technical solutions recorded in the foregoing embodiments, or equivalent replacements can be made to some of the technical features therein; and these modifications or replacements do not make the essence of the corresponding technical solutions depart from the scope of the technical solutions of some embodiments of this application.

## Claims

1. A battery, comprising a housing and an electrode assembly accommodated in the housing, wherein an inner surface of the housing is provided with a first welding zone, and the first welding zone is configured to be electrically connected to the electrode assembly; and
in secondary ion mass spectrometry testing, the first welding zone comprises a negative ion organic peak 118, an ion count ratio of the negative ion organic peak 118 is A1%, and A1≤0.5.

2. The battery according to claim 1, wherein the battery further comprises a current collecting disc, and the current collecting disc is electrically connected between the housing and the electrode assembly;
a surface of the current collecting disc facing the first welding zone is provided with a second welding zone, and the second welding zone is welded to the first welding zone; and
the second welding zone comprises a negative ion organic peak 118, an ion count ratio of the negative ion organic peak 118 of the second welding zone is A2%, and A2≤0.5.

3. The battery according to claim 1 or 2, wherein A1<0.1.

4. The battery according to claim 2 or 3, wherein A2≤0.1.

5. The battery according to any one of claims 1 to 4, wherein an inner surface of a bottom of the housing is provided with a first zone, and when viewed along a first direction, a projection of the first welding zone is at least partially located within a projection of the first zone; wherein the first direction is a direction from the bottom of the housing to the electrode assembly.

6. The battery according to claim 5, wherein when viewed along the first direction, the projection of the first welding zone is entirely located within the projection of the first zone.

7. The battery according to claim 2 or 4, wherein a surface of the current collecting disc facing the bottom of the housing is provided with a second zone, and when viewed along the first direction, a projection of the second welding zone is at least partially located within a projection of the second zone.

8. The battery according to claim 7, wherein when viewed along the first direction, the projection of the second welding zone is entirely located within the projection of the second zone.

9. The battery according to claim 5 or 6, wherein the bottom of the housing comprises a first portion and a second portion, the first zone is provided on the first portion, and when viewed along the first direction, a projection of the second portion does not overlap with a projection of the first portion; and
along the first direction, a thickness of the first portion is T1, a thickness of the second portion is T2, and 6 µm≤T1-T2≤20 µm.

10. The battery according to claim 7 or 8, wherein the current collecting disc comprises a third portion and a fourth portion, the second zone is located on the third portion, and when viewed along the first direction, a projection of the third portion does not overlap with a projection of the fourth portion; and
along the first direction, a thickness of the third portion is T3, a thickness of the fourth portion is T4, and 6 µm≤T3-T4≤20 µm.

11. The battery according to claim 9, wherein 10 µm≤T1-T2≤18 µm.

12. The battery according to claim 10, wherein 10 µm≤T3-T4≤18 µm.

13. The battery according to any one of claims 5, 6, and 9, wherein a concentric distance between the first zone and the bottom of the housing is C1, and C1≤0.5 mm.

14. The battery according to any one of claims 7, 8, 10, and 12, wherein a concentric distance between the second zone and the current collecting disc is C2, and C2≤0.5 mm.

15. The battery according to any one of claims 1 to 14, wherein the first welding zone has a welding trajectory, and the welding trajectory is spiral-shaped or arc-shaped.

16. The battery according to claim 15, wherein a circumscribed circle diameter of the welding trajectory is D, and 4 mm≤D≤6 mm.

17. The battery according to any one of claims 5, 6, 9, 11, and 13, wherein the first zone is annular, an inner diameter of the annular first zone is denoted as D1, and 2 mm≤D1≤100 mm; and an outer diameter of the annular first zone is denoted as D2, and 5 mm≤D2≤200 mm.

18. The battery according to any one of claims 7, 8, 10, 12, 14, wherein the second zone is annular, an inner diameter of the annular second zone is denoted as D3, and 2 mm≤D3≤100 mm; and an outer diameter of the annular second zone is denoted as D4, and 5 mm≤D4≤200 mm.

19. An electronic device, comprising the battery according to any one of claims 1 to 18.

20. A polarity lead-out method, comprising:
providing a housing, and performing laser cleaning on an inner surface of the housing to obtain a first welding zone, wherein the first welding zone comprises a negative ion organic peak 118, an ion count ratio of the negative ion organic peak 118 is A1%, and A1≤0.5; and
providing an electrode assembly, wherein the electrode assembly is accommodated in the housing, the electrode assembly is electrically connected to the first welding zone, and a positive electrode or a negative electrode of the electrode assembly is led out of the housing.

21. The method according to claim 20, comprising:
providing a current collecting disc, wherein the current collecting disc is electrically connected to the electrode assembly; and
performing laser cleaning on the current collecting disc to obtain a second welding zone, wherein the second welding zone is welded to the first welding zone of the housing, the second welding zone comprises a negative ion organic peak 118, an ion count ratio of the negative ion organic peak 118 of the second welding zone is A2%, and A2≤0.5.
